# EUROPÄISCHE PATENTSCHRIFT

(11) **EP 2 685 124 B1**
(45) Veröffentlichungstag und Bekanntmachung des Hinweises auf die Patenterteilung: **14.09.2016**
(21) Anmeldenummer: 13176033.2
(22) Anmeldetag: 11.07.2013
(51) Int. Cl.: F16D 65/18, F16D 65/56

(54) **Scheibenbremse für ein Nutzfahrzeug**
Disc brake for a commercial vehicle
Frein à disque pour un véhicule utilitaire

(30) Priorität: 13.07.2012 DE 102012013966
(43) Veröffentlichungstag der Anmeldung: 15.01.2014
(73) Patentinhaber: KNORR-BREMSE Systeme für Nutzfahrzeuge GmbH, 80809 München (DE)
(72) Erfinder: Asen, Alexander, 94428 Eichendorf (DE)

(56) Entgegenhaltungen:
- EP-A2- 2 535 614
- WO-A1-2013/050327
- WO-A1-2014/161672
- DD-A1- 262 897
- DE-A1-102009 029 719
- DE-U1- 9 422 342
- US-A- 5 246 404

## Beschreibung

Die Erfindung betrifft eine Scheibenbremse für ein Nutzfahrzeug nach dem Oberbegriff des Anspruchs 1.

In der DE 94 22 342 U1 ist eine derartige Scheibenbremse geoffenbart. Bei dieser bekannten Scheibenbremse wirkt ein Drehhebel auf eine in einem Bremssattel positionierte Brücke ein, in der zwei Stellspindeln gelagert sind, die jeweils ein Druckstück zur Aufnahme eines aus einer Belagträgerplatte und einem daran befestigten Reibbelag bestehenden Bremsbelages aufweisen, der bei einer Bremsung an eine Bremsscheibe angedrückt wird. Die beiden Stellspindeln sind mit einem Außengewinde versehen und jeweils in eine Gewindebohrung der Brücke eingeschraubt.

Mithilfe einer Nachstelleinrichtung, die einer der Stellspindeln zugeordnet ist, wird durch Verdrehen der Stellspindeln in den Gewindebohrungen bei Verschleiß des Reibbelages der Bremsbelag so weit zugestellt, dass ein Lüftspiel zwischen dem Bremsbelag und der Bremsscheibe im Wesentlichen immer konstant bleibt. Hierzu wird ein konzentrisch an einer Stellspindel angeordneter Nachsteller, z.B. über ein Antriebselement vom Bremshebel angetrieben.

Da dieser Nachsteller lediglich in einer Stellspindel angeordnet ist, die Nachstellung des Bremsbelages jedoch gleichmäßig erfolgen soll und damit auch die zweite Stellspindel entsprechend verstellt werden muss, ist ein vorzugsweise formschlüssiger Zugmitteltrieb vorgesehen, der die Drehbewegungen der einen Stellspindel auf die andere synchron überträgt. Als Zugmittel wird beispielsweise eine Gliederkette eingesetzt, die auf Kettenrädern der Stellspindeln umlaufend geführt ist.

Ein als Zahnriemen ausgebildetes Zugmittel ist in der DE 40 32 886 A1 gezeigt und beschrieben, wobei dieser Zahnriemen in entsprechend geformte Zahnräder der Stellspindeln eingreift. Daneben sind auch andere Zugmittel denkbar, die umlaufend, form- und/oder reibschlüssig an Treibrädern angreifend, unter Bildung von zwei Trumen geführt sind.

Zu beklagen ist allerdings, dass sich das Zugmittel mit zunehmender Betriebsdauer reckt, woraus sich ein Übertragungsspiel ergibt, durch das die synchrone, d.h. gleichmäßige und gleichzeitige Verstellung beider Stellspindeln nicht mehr gegeben ist. Dies ist gleichermaßen der Fall durch ein vorhandenes Spiel zwischen Nachsteller und einem Mitnehmer.

Dadurch kommt es nicht nur zu einem ungleichmäßigen Verschleiß des Reibbelages, sondern unter Umständen zu einer Einschränkung der Bremswirkung, da das genannte Lüftspiel, also der Abstand zwischen der Bremsscheibe und dem Reibbelag bei unbetätigter Bremse ungleichmäßig ist und der Reibbelag bei einer Bremsung nicht vollflächig an der Bremsscheibe anliegt. In der Folge führt dies zu einem Schrägverschleiß des Reibbelages und damit zu einer Reduzierung der Standzeit.

Der Erfindung liegt die Aufgabe zugrunde, eine Scheibenbremse der gattungsgemäßen Art so weiterzuentwickeln, dass ihre Funktions- und Betriebssicherheit verbessert wird.

Diese Aufgabe wird durch eine Scheibenbremse mit den Merkmalen des Anspruchs 1 gelöst.

Durch die Spannfeder, die bevorzugt etwa im Mittenbereich des Trums, bezogen auf dessen Längserstreckung, angreift, wird sicher erreicht, dass ein betriebsbedingtes Längen des Zugmittels ausgeglichen wird. Dabei greift die Spannfeder bevorzugt an dem in montierter Stellung der Scheibenbremse unteren Trum des Zugmittels an.

Nach einem weiteren Gedanken der Erfindung ist die Spannfeder als Blattfeder ausgebildet, die einseitig fest eingespannt ist, während die andere Seite, entsprechend der Auslenkung der Spannfeder verschiebbar ist.

Über eine an diesem Ende verstellbar angeordnete Schraube kann die Federspannung und damit die Kettenspannung variiert werden.

Bei einer Anordnung der Synchronisiereinrichtung außerhalb des Bremssattels erfolgt die Befestigung der Blattfeder an einem Verschlussdeckel, mit dem die Synchroneinrichtung überdeckt und gegenüber der Umgebung abgedichtet ist. Dabei ist der Verschlussdeckel als Kunststoffspritzgussteil hergestellt und die Blattfeder mit ihrem eingespannten Ende eingespritzt. In diesem Sinne kann auch eine Halterung der Stellschraube integraler Bestandteil des Verschlussdeckels sein, beispielsweise durch Eingießen eines Mutterteils, in das die Stellschraube eindrehbar ist.

Somit kann die aus der Spannfeder und dem Stellelement, in Form der genannten Stellschraube, gebildete Spanneinrichtung ohne wesentliche bauliche Veränderung in die Scheibenbremse integriert werden, so dass sich die Erfindung mit äußerst geringen Kosten realisieren lässt. Zumindest stehen diese Kosten in keinem nennenswerten Verhältnis zu dem funktionalen Nutzen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den schematischen Aufbau einer erfindungsgemäßen Scheibenbremse in einer teilweise geschnittenen Draufsicht
- Figur 2: einen Schnitt durch die Scheibenbremse entsprechend der Linie II-II in Figur 1
- Figur 3: einen vergrößerten Ausschnitt, gemäß der Angabe III in Figur 2.

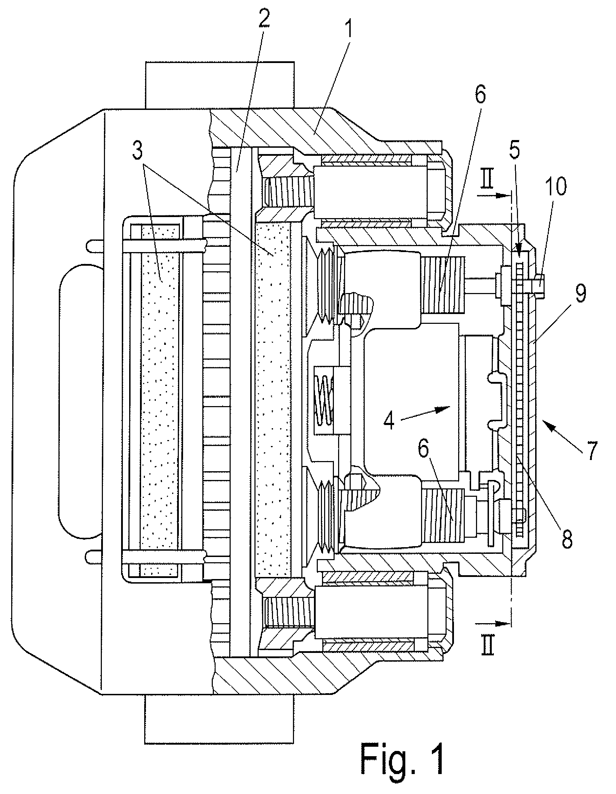

In der Figur 1 ist eine Scheibenbremse für ein Nutzfahrzeug dargestellt mit einem eine Bremsscheibe 2 übergreifenden Bremssattel 1, beidseitige der Bremsscheibe 2 angeordneten und diese bei einer Bremsung kontaktierenden Bremsbelägen 3 und einer Zuspanneinrichtung 4, mit der der zuspannseitige Bremsbelag 3 gegen die Bremsscheibe 2 pressbar ist. Dabei wird der Anpressdruck von zwei Stellspindeln 6 von der Zuspanneinrichtung 4 auf den Bremsbelag 3 übertragen.

Weiter weist die Scheibenbremse eine Nachstelleinrichtung auf, mit der eine verschleißbedingte Änderung eines Lüftspiels zwischen dem Bremsbelag 3 und der Bremsscheibe 2 im Wesentlichen ausgleichbar ist.

Für eine synchrone Verstellung der Stellspindeln 6 ist eine Synchroneinrichtung 7 vorgesehen, mit einem Zugmitteltrieb 5 in Form eines Kettentriebes, bestehend aus zwei, jeweils an den Stellspindeln 3 verdrehsicher angeordneten Kettenrädern 11 sowie einer darauf geführten Kette 8 mit zwei Trumen 12.

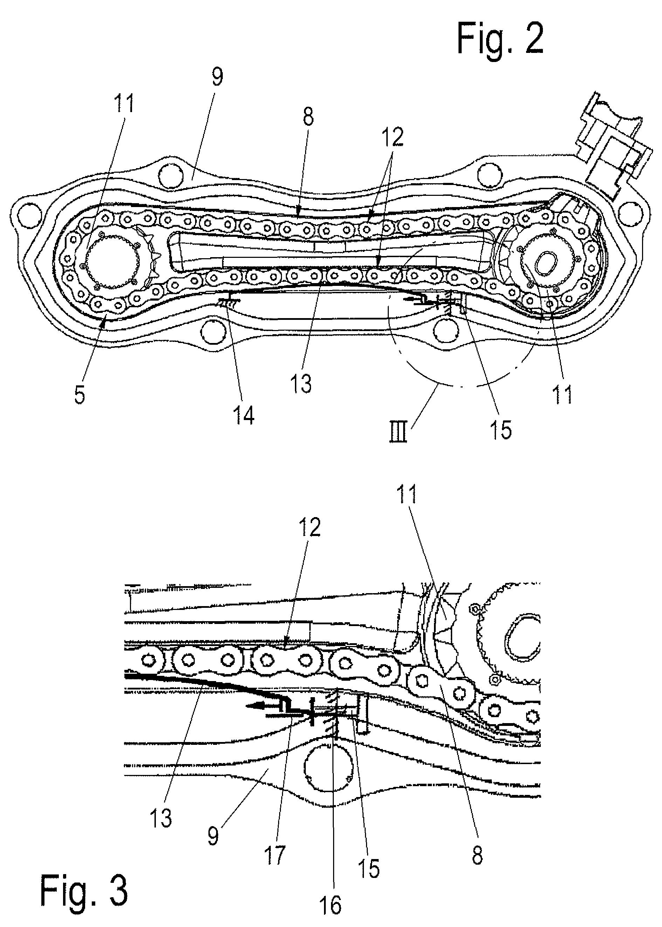

Die außerhalb des Bremssattels 1 positionierte Synchroneinrichtung 7, zu der auch eine Aufnahme 10 für eine Verschleißerkennung, beispielsweise für einen Potentiometer gehört, ist gegenüber der Umgebung durch einen Verschlussdeckel 9 abgedeckt, der in der Figur 2 als Einzelheit ebenso deutlich erkennbar ist wie der Zugmitteltrieb 5, der von dem Verschlussdeckel 9 überdeckt ist.

Entsprechend der Erfindung liegt an einem Trum 12 des Zugmittels, im Ausführungsbeispiel am unteren Trum 12 der Kette 8, eine Spannfeder an, die als bügelförmig in Richtung des Trums 12 gebogene, aus einem Federblech bestehende Blattfeder 19 ausgebildet ist.

Dabei ist die Blattfeder 13 mit ihrem einen Ende in den aus Kunststoff bestehenden Verschlussdeckel 9 eingebettet und zwar in einem in der Figur 2 deutlich erkennbaren Festlager 14.

Das andere Ende der Blattfeder 13 hingegen ist im Sinne eines Loslagers gehalten, was besonders deutlich in der Figur 3 erkennbar ist, die einen vergrößerten Ausschnitt des entsprechenden Bereiches wiedergibt.

Dieses Loslager weist eine ortsfeste Schiebeschiene 17 auf, an der die Blattfeder 13 mit einem daran angepassten Ende anliegt, das bei Spannung der Blattfeder 13 hin zum Trum 12 entsprechend verschoben wird.

Für einen ausreichenden Spanndruck der Blattfeder 13 gegenüber dem Trum 12 ist eine Stellschraube 15 vorgesehen, die in ein in den Verschlussdeckel 9 eingegossenes Muttergewinde 16 eingedreht ist und zur Verstellung der Blattfeder 13 an deren zugeordnetem Ende angreift.

Die Blattfeder 13 ist so gebogen, dass lediglich ein geringer Bereich zur Anlage am Trum 12 kommt, so dass die Reibung zwischen dem Trum 12 und der Blattfeder 13 minimiert ist.

## Patentansprüche

1. Scheibenbremse für ein Nutzfahrzeug mit
a) einem eine Bremsscheibe (2) übergreifenden Bremssattel (1),
b) einer im Bremssattel (1) angeordneten Zuspanneinrichtung (4) zum Andrücken von Bremsbelägen (3) an die Bremsscheibe (2),
c) zwei parallel und abständig zueinander angeordneten Stellspindeln (6), mit der Zuspanneinrichtung (4) in Wirkverbindung stehen,
d) einer im Bremssattel (1) positionierten Nachstelleinrichtung, mit der über eine axiale Verstellung der Stellspindeln (6) eine verschleißbedingte Änderung eines Lüftspiels zwischen dem Bremsbelag (3) und der Bremsscheibe (2) im Wesentlichen ausgleichbar ist, sowie
e) einer von einem am Bremssattel (1) befestigten Verschlussdeckel (9) überdeckten Synchroneinrichtung (7) mit einem Zugmitteltrieb (5), mit dem die beiden Stellspindeln (6) synchron verstellbar sind und der ein Zugmittel mit zwei Trumen (12) aufweist,
**dadurch gekennzeichnet, dass**
f) an einem Trum (12) eine Spannfeder anliegt.

2. Scheibenbremse nach Anspruch 1, **dadurch gekennzeichnet, dass** die Spannfeder als Blattfeder (13) ausgebildet ist.

3. Scheibenbremse nach Anspruch 2, **dadurch gekennzeichnet, dass** die Blattfeder (13) bogenförmig ausgebildet ist und sich in Längsrichtung des Trums (12) erstreckt.

4. Scheibenbremse nach einem der Ansprüche 2 oder 3, **dadurch gekennzeichnet, dass** die Blattfeder (13) an einem Ende fest eingespannt und am anderen Ende verschiebbar gelagert ist.

5. Scheibenbremse nach einem der Ansprüche 2 bis 4, **dadurch gekennzeichnet, dass** die Blattfeder (13) mit ihrem festen Ende in den aus Kunststoff bestehenden Verschlussdeckel (9) eingegossen ist.

6. Scheibenbremse nach einem der Ansprüche 2 bis 5, **dadurch gekennzeichnet, dass** das verschiebbare Ende der Blattfeder (13) an einer ortsfesten Schiebeschiene (17) anliegt.

7. Scheibenbremse nach einem der Ansprüche 2 bis 6, **dadurch gekennzeichnet, dass** am verschiebbaren Ende der Blattfeder (13) eine Stellschraube (15) angreift.

8. Scheibenbremse nach Anspruch 7, **dadurch gekennzeichnet, dass** die Stellschraube (15) in ein im Verschlussdeckel (9) angeordnetes Muttergewinde (16) eingedreht ist.

9. Scheibenbremse nach einem der Ansprüche 2 bis 8, **dadurch gekennzeichnet, dass** die Blattfeder (13) aus einem Federblech gebildet ist.

10. Scheibenbremse nach einem der Ansprüche 2 bis 9, **dadurch gekennzeichnet, dass** die Blattfeder (13) an dem, bezogen auf die Achse der Bremsscheibe (2) unteren Trum (12) anliegt.

## Claims

1. Disc brake for a commercial vehicle, comprising
(a) a brake calliper (1) encompassing a brake disc (2),
(b) a brake application means (4) disposed in said brake calliper (1) for pressing brake linings (3) against said brake disc (2),
(c) two adjusting spindles (6) disposed in parallel at a space from each other, which are in operating connection with said brake application means,
(d) an adjusting means positioned in said brake calliper (1), which permits substantially the compensation of a variation of a clearance between said brake lining (3) and said brake disc (2), which is due to wear, by an axial adjustment of said adjusting spindles (6), as well as
(e) a synchronizing means (7) covered by a closing cover (9) fastened on said brake calliper (1) and including a drive system with traction mechanism (5) by means of which said two adjusting spindles (6) are adjustable in synchrony and which includes a traction mechanism with two strands (12),
**characterised in that**
(f) a tensioning spring bears against one strand (12).

2. Disc brake according to Claim 1, **characterised in that** said tensioning spring is configured as leaf spring (13).

3. Disc brake according to Claim 2, **characterised in that** said leaf spring (13) has an arc-shaped configuration and extends along the longitudinal direction of said strand (12).

4. Disc brake according to any of the Claims 2 or 3, **characterised in that** said leaf spring (13) is fixedly clamped on one end and is supported for displacement on the other end.

5. Disc brake according to any of the Claims 2 to 4 **characterised in that** said leaf spring (13) is cast, by its fixed end, in said closing cover (9) consisting of a synthetic material.

6. Disc brake according to any of the Claims 2 to 5, **characterised in that** said displaceable end of said leaf spring (13) bears against a stationary sliding rail (17).

7. Disc brake according to any of the Claims 2 to 6, **characterised in that** said an adjusting screw (15) acts on said displaceable end of said leaf spring (13).

8. Disc brake according to Claim 7, **characterised in that** said adjusting screw (15) is screwed into a female thread (16) disposed in said closing cover (9).

9. Disc brake according to any of the Claims 2 to 8, **characterised in that** said leaf spring (13) is made of a spring sheet.

10. Disc brake according to any of the Claims 2 to 9, **characterised in that** said leaf spring (13) bears against the lower strand (12), relative to the axis of said brake disc (2).

## Revendications

1. Frein à disque pour un véhicule utilitaire, comprenant :
(a) un étrier de frein (1) chevauchant un disque de frein (2),
(b) un moyen de serrage du frein (4) disposé dans ledit étrier de frein (1) afin de presser des garnitures de frein (3) contre ledit disque de frein (2),
(c) deux broches de réglage (6) disposées en parallèle et à un écart l'une de l'autre, qui sont en connexion opérative avec ledit moyen de serrage du frein,
(d) un moyen de rattrapage positionné dans ledit étrier de frein (1), qui permet essentiellement la compensation d'une variation d'un jeu entre ladite garniture de frein (3) et ledit disque de frein (2), en raison de l'usure, par un réglage axial desdites broches de réglage (6), ainsi qu'un
(e) moyen de synchronisation (7) couvert d'un couvercle de fermeture (9) fixé audit étrier de frein (1) et renfermant un système d'entraînement à un mécanisme de traction (5), moyennant duquel lesdites deux broches de réglage (6) sont ajustables de manière synchronisée, et qui comprend un mécanisme de traction à deux tronçons (12),
**caractérisé en ce**
(f) qu'un ressort de rappel porte contre un tronçon (12).

2. Frein à disque selon la revendication 1, **caractérisé en ce que** ledit ressort de rappel est configuré sous forme d'une lame de ressort (13).

3. Frein à disque selon la revendication 2, **caractérisé en ce que** ladite lame de ressort (13) présente une configuration en arc et s'étend le long de la direction longitudinale dudit tronçon (12).

4. Frein à disque selon une quelconque des revendications 2 ou 3, **caractérisé en ce que** ladite lame de ressort (13) est serré, de façon fixe, à une extrémité en étant appuyée sur l'autre extrémité pour déplacement.

5. Frein à disque selon une quelconque des revendications 2 à 4 **caractérisé en ce que** ladite lame de ressort (13) est coulée, par son extrémité fixée, dans ledit couvercle de fermeture (9), qui consiste en un matériau synthétique.

6. Frein à disque selon une quelconque des revendications 2 à 5, **caractérisé en ce que** ladite extrémité déplaçable de ladite lame de ressort (13) porte contre une coulisse (17) stationnaire.

7. Frein à disque selon une quelconque des revendications 2 à 6, **caractérisé en ce qu'**une vis de réglage (15) agit sur ladite extrémité déplaçable de ladite lame de ressort (13).

8. Frein à disque selon la revendication 7, **caractérisé en ce que** ladite vis de réglage (15) est vissée dans un filet femelle (16) disposé dans ledit couvercle de fermeture (9).

9. Frein à disque selon une quelconque des revendications 2 à 8, **caractérisé en ce que** ladite lame de ressort (13) est faite en une tôle élastique.

10. Frein à disque selon une quelconque des revendications 2 à 9, **caractérisé en ce que** ladite lame de ressort (13) porte contre le tronçon inférieur (12), relativement à l'axe dudit disque de frein (2).
